(19) Europäisches Patentamt / European Patent Office / Office européen des brevets

(11) **EP 3 480 876 B1**

(12) **EUROPEAN PATENT SPECIFICATION**

(45) Date of publication and mention
of the grant of the patent:
**07.02.2024 Bulletin 2024/06**

(21) Application number: **17819995.6**

(22) Date of filing: **21.06.2017**

(51) International Patent Classification (IPC):
*H01M 4/62* (2006.01)     *H01M 10/0566* (2010.01)
*H01M 4/04* (2006.01)     *H01M 10/0525* (2010.01)

(52) Cooperative Patent Classification (CPC):
**H01M 4/0404; H01M 4/62; H01M 4/622;**
**H01M 10/0525; H01M 10/0566;** H01M 2300/0017;
Y02E 60/10

(86) International application number:
**PCT/JP2017/022899**

(87) International publication number:
**WO 2018/003636 (04.01.2018 Gazette 2018/01)**

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

BINDEMITTELZUSAMMENSETZUNG FÜR ELEKTRODE EINER WASSERFREIEN SEKUNDÄRBATTERIE, SCHLAMMZUSAMMENSETZUNG FÜR ELEKTRODE EINER WASSERFREIE SEKUNDÄRBATTERIE, ELEKTRODE FÜR WASSERFREIE SEKUNDÄRBATTERIE UND WASSERFREIE SEKUNDÄRBATTERIE

COMPOSITION DE LIANT POUR ÉLECTRODE DE BATTERIE SECONDAIRE NON AQUEUSE, COMPOSITION DE SUSPENSION EPAISSE POUR ÉLECTRODE DE BATTERIE SECONDAIRE NON AQUEUSE, ÉLECTRODE POUR BATTERIE SECONDAIRE NON AQUEUSE ET BATTERIE SECONDAIRE NON AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2016 JP 2016129093**

(43) Date of publication of application:
**08.05.2019 Bulletin 2019/19**

(73) Proprietor: **Zeon Corporation**
**Tokyo 100-8246 (JP)**

(72) Inventors:
• **YAMAMOTO Norikazu**
**Tokyo 100-8246 (JP)**

• **TAKAHASHI Naoki**
**Tokyo 100-8246 (JP)**

(74) Representative: **Maiwald GmbH**
**Elisenhof**
**Elisenstraße 3**
**80335 München (DE)**

(56) References cited:
WO-A1-2012/026583     WO-A1-2012/026583
WO-A1-2014/156195     WO-A1-2016/051713
GB-A- 1 190 849     JP-A- H11 111 268
JP-A- 2012 243 476     US-A- 4 043 955

EP 3 480 876 B1

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries"), such as lithium ion secondary batteries, have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a secondary battery, such as a lithium ion secondary battery, generally includes a current collector and an electrode mixed material layer formed on the current collector. The electrode mixed material layer is formed, for example, by applying, onto the current collector, a slurry composition in which an electrode active material, a binder-containing binder composition, and so forth are dispersed in a dispersion medium, and drying the applied slurry composition.

In recent years, there have been attempts to improve binder compositions used in the formation of electrode mixed material layers in order to further improve secondary battery performance. In one specific example, PTL 1 proposes an aqueous binder for battery electrode formation having, as a main component, a styrene-butadiene copolymer latex that has a butadiene bond content of 40 mass% to 98 mass% and a gel content of 20 weight% to 74 weight% as measured using toluene. According to PTL 1, this aqueous binder for battery electrode formation can suitably be used to obtain a secondary battery that has a long cycle life and is resistant to long-term use and storage.

WO 2012/026583 relates to an all-solid-state secondary battery which is characterised by at least one layer among the positive electrode active material layer, the negative electrode active material layer, and the solid electrolyte layer having a solid electrolyte, and a polymer including a nitrile group-containing polymerisation unit; the content ratio of the nitrile group-containing polymerisation unit in the polymer being 2-30 mass%; and the iodine value of the polymer being 0mg/100mg - 30mg/100mg inclusive.

GB 1 190 849 A relates to a process for increasing the size of polymer particles capable of coalescing together in an aqueous latex of the said particles, and to an aqueous polymer latex prepared by the process. The polymer can be a diene rubber polymer.

US 4 043 955 A1 relates to an improved process for agglomerating polymer particles in an aqueous latex.

CITATION LIST

Patent Literature

PTL 1: JP H8-250123 A

SUMMARY

(Technical Problem)

Electrodes of secondary batteries are required to have bending resistance in order to prevent cracking caused, for example, by winding in secondary battery production or by expansion and contraction of electrode active material during repeated charging and discharging. In addition, with regards to secondary battery electrodes, it is desirable that when, for example, an electrolyte solution is injected into a case having battery members such as electrodes enclosed therein during secondary battery production, the electrolyte solution favorably penetrates into the electrodes (i.e., good electrolyte solution injectability is desirable).

However, it is difficult to achieve both excellent electrode bending resistance and good electrolyte solution injectability in secondary battery production using the conventional binder composition described above. Consequently, there have been cases in which it has not been possible to cause a secondary battery including an electrode produced using this binder composition to display adequate battery characteristics.

Accordingly, an objective of the present disclosure is to provide a binder composition for a non-aqueous secondary battery electrode and a slurry composition for a non-aqueous secondary battery electrode that can form an electrode having excellent bending resistance and can ensure good electrolyte solution injectability in secondary battery production.

Another objective of the present disclosure is to provide an electrode for a non-aqueous secondary battery that has excellent bending resistance and can ensure good electrolyte solution injectability in secondary battery production, and a non-aqueous secondary battery including this electrode for a non-aqueous secondary battery.

(Solution to Problem)

The inventors conducted diligent investigation with the aim of solving the problems set forth above. Through this investigation, the inventors discovered that by using a polymer including an aliphatic conjugated diene monomer unit and a nitrile group-containing monomer unit in specific proportions as a binder, it is possible to obtain a binder composition for a non-aqueous secondary battery electrode that can provide an electrode with excellent bending resistance and can ensure good electrolyte solution injectability in secondary battery production. In this manner, the inventors completed the present disclosure.

Specifically, the present disclosure aims to advantageously solve the problems set forth above by disclosing a binder composition for a non-aqueous secondary battery electrode comprising a polymer A and a polymer B, wherein the polymer A includes an aliphatic conjugated diene monomer unit in a proportion of at least 86 mass% and not more than 95 mass% and a nitrile group-containing monomer unit in a proportion of at least 1 mass% and not more than 14 mass%, and the polymer B includes an aliphatic conjugated diene monomer unit in a proportion of at least 20 mass% and not more than 80 mass% and an aromatic vinyl monomer unit. Through use of a binder composition that contains a polymer A and a polymer B as specified above in this manner, an electrode having excellent bending resistance can be formed, and good electrolyte solution injectability in secondary battery production can be ensured.

The phrase "includes a monomer unit" as used in the present disclosure means that "a polymer obtained with that monomer includes a repeating unit derived from the monomer".

In the presently disclosed binder composition for a non-aqueous secondary battery electrode, the polymer A includes an aliphatic conjugated diene monomer unit in a proportion of at least 86 mass% and not more than 95 mass% and a nitrile group-containing monomer unit in a proportion of at least 1 mass% and not more than 14 mass%. Inclusion of a nitrile group-containing monomer unit in the polymer A in the aforementioned proportion can inhibit the occurrence of post-pressing thickness recovery of an electrode that has undergone thickness reduction through pressing treatment (i.e., the occurrence of electrode spring-back), and can also inhibit deposition of metal, such as lithium, at the surface of an electrode after charging and discharging of a secondary battery.

In the presently disclosed binder composition for a non-aqueous secondary battery electrode, the polymer A preferably has a volume-average particle diameter of at least 0.01 $\mu$m and not more than 0.15 $\mu$m. When the volume-average particle diameter of the polymer A is within the range set forth above, electrode spring-back can be inhibited, and deposition of metal, such as lithium, at the surface of an electrode after charging and discharging of a secondary battery can also be inhibited.

The term "volume-average particle diameter" as used in the present disclosure refers to a particle diameter (D50) at which, in a particle diameter distribution (volume basis) measured by laser diffraction, cumulative volume calculated from a small diameter end of the distribution reaches 50%.

The presently disclosed binder composition for a non-aqueous secondary battery electrode further comprises a polymer B, wherein the polymer B includes an aliphatic conjugated diene monomer unit in a proportion of at least 20 mass% and not more than 80 mass%, and an aromatic vinyl monomer unit. Inclusion of the polymer B including an aliphatic conjugated diene monomer unit in the aforementioned proportion in the binder composition, in addition to the polymer A, can increase close adhesion strength between an electrode mixed material layer and a current collector (i.e., peel strength of an electrode) and can also further improve electrode bending resistance and electrolyte solution injectability in secondary battery production.

In the presently disclosed binder composition for a non-aqueous secondary battery electrode, the polymer B preferably has a volume-average particle diameter of at least 0.01 $\mu$m and not more than 0.5 $\mu$m. When the volume-average particle diameter of the polymer B is within the range set forth above, electrode peel strength can be further increased, and deposition of metal, such as lithium, at the surface of an electrode after charging and discharging of a secondary battery can be inhibited.

In the presently disclosed binder composition for a non-aqueous secondary battery electrode, the polymer B preferably has a THF-insoluble content of at least 80 mass% and not more than 96 mass%. When insoluble content of the polymer B with respect to THF (tetrahydrofuran) is within the range set forth above, electrode peel strength can be increased, and deposition of metal, such as lithium, at the surface of an electrode after charging and discharging of a secondary battery can be inhibited.

The "THF-insoluble content" of a polymer referred to in the present disclosure can be measured by a method described in the EXAMPLES section of the present specification.

In the presently disclosed binder composition for a non-aqueous secondary battery electrode, content of the polymer B is preferably at least 20 mass% and not more than 80 mass% of total content of the polymer A and the polymer B. When the proportion constituted by the polymer B among the total of the polymer A and the polymer B is within the range set forth above, electrode bending resistance and electrolyte solution injectability in secondary battery production can be further improved.

Moreover, the present disclosure aims to advantageously solve the problems set forth above by disclosing a slurry composition for a non-aqueous secondary battery electrode comprising: an electrode active material; and any one of the binder compositions for a non-aqueous secondary battery electrode set forth above. Through use of a slurry composition containing an electrode active material and any one of the binder compositions set forth above in this manner, an electrode having excellent bending resistance can be formed, and good electrolyte solution injectability in secondary battery production can be ensured.

Furthermore, the present disclosure aims to advantageously solve the problems set forth above by disclosing an electrode for a non-aqueous secondary battery comprising an electrode mixed material layer formed using the slurry composition for a non-aqueous secondary battery electrode set forth above. When an electrode mixed material layer is formed using the slurry composition for a non-aqueous secondary battery electrode set forth above in this manner, an electrode for a non-aqueous secondary battery that has excellent bending resistance and can ensure good electrolyte solution injectability in secondary battery production can be obtained.

Also, a presently disclosed non-aqueous secondary battery comprises a positive electrode, a negative electrode, an electrolyte solution, and a separator, wherein at least one of the positive electrode and the negative electrode is the electrode for a non-aqueous secondary battery set forth above. Through use of the electrode for a non-aqueous secondary battery set forth above in this manner, a non-aqueous secondary battery having excellent battery characteristics can be obtained.

(Advantageous Effect)

According to the present disclosure, it is possible to provide a binder composition for a non-aqueous secondary battery electrode and a slurry composition for a non-aqueous secondary battery electrode that can form an electrode having excellent bending resistance and can ensure good electrolyte solution injectability in secondary battery production.

Moreover, according to the present disclosure, it is possible to provide an electrode for a non-aqueous secondary battery that has excellent bending resistance and can ensure good electrolyte solution injectability in secondary battery production, and a non-aqueous secondary battery including this electrode for a non-aqueous secondary battery.

DETAILED DESCRIPTION

The following provides a detailed description of embodiments of the present disclosure.

A presently disclosed binder composition for a non-aqueous secondary battery electrode can be used in the production of a slurry composition for a non-aqueous secondary battery electrode. The slurry composition for a non-aqueous secondary battery electrode produced using the presently disclosed binder composition for a non-aqueous secondary battery electrode can be used in the formation of an electrode of a non-aqueous secondary battery such as a lithium ion secondary battery. A presently disclosed non-aqueous secondary battery uses the electrode for a non-aqueous secondary battery formed using the presently disclosed slurry composition for a non-aqueous secondary battery electrode.

Note that the presently disclosed binder composition for a non-aqueous secondary battery electrode and slurry composition for a non-aqueous secondary battery electrode are particularly suitable for use in formation of a negative electrode of a non-aqueous secondary battery.

(Binder composition for non-aqueous secondary battery electrode)

The presently disclosed binder composition for a non-aqueous secondary battery electrode contains a polymer A and a polymer B and may optionally further contain other components that can be used in secondary battery electrodes. Moreover, the presently disclosed binder composition for a non-aqueous secondary battery electrode normally further contains a dispersion medium such as water. In the presently disclosed binder composition for a non-aqueous secondary battery electrode, the polymer A includes an aliphatic conjugated diene monomer unit in a proportion of at least 86 mass% and not more than 95 mass% and a nitrile group-containing monomer unit in a proportion of at least 1 mass% and not more than 14 mass%.

The presently disclosed binder composition for a non-aqueous secondary battery electrode can provide an electrode with excellent bending resistance when used in formation of an electrode mixed material layer of the electrode (i.e., when used as a binder composition for an electrode mixed material layer) and can increase electrolyte solution injectability in secondary battery production as a result of containing the polymer A that includes an aliphatic conjugated diene monomer unit and a nitrile group-containing monomer unit in specific proportions.

The reason that bending resistance and electrolyte solution injectability in secondary battery production can be increased when the polymer A including an aliphatic conjugated diene monomer unit and a nitrile group-containing monomer unit in the aforementioned proportions is used as a binder is presumed to be as follows. Firstly, an aliphatic conjugated diene monomer unit is a repeating unit that has excellent flexibility. Therefore, the inclusion of an aliphatic conjugated diene monomer unit with a percentage content of 86 mass% or more can sufficiently increase flexibility of the polymer A itself and can provide an electrode with excellent bending resistance. On the other hand, an aliphatic conjugated diene monomer unit cannot be said to have favorable compatibility with an electrolyte solution, which makes it difficult to ensure affinity with an electrolyte solution in the case of a polymer that, for example, is composed solely of aliphatic conjugated diene monomer units. However, since the percentage content of the aliphatic conjugated diene monomer unit in the polymer A is 95 mass% or less, the polymer A inevitably includes one or more types of repeating units other than the aliphatic conjugated diene monomer unit. As a result, affinity of the polymer A with electrolyte solution is not excessively lost due to the aliphatic conjugated diene monomer unit, and electrolyte solution can favorably penetrate an electrode mixed material layer containing the polymer A.

<Polymer A>

In an electrode produced by forming an electrode mixed material layer on a current collector using a slurry composition for a non-aqueous secondary battery electrode produced using the binder composition, the polymer A holds components contained in the electrode mixed material layer to prevent these components detaching from the electrode mixed material layer (i.e., the polymer A functions as a binder).

«Chemical composition of polymer A»

The polymer A includes an aliphatic conjugated diene monomer unit as a repeating unit, and also includes a nitrile group-containing monomer unit. However, the polymer A may further include monomer units other than the aliphatic conjugated diene monomer unit and the nitrile group-containing monomer unit (hereinafter, referred to as "other monomer units").

[Aliphatic conjugated diene monomer unit]

Examples of aliphatic conjugated diene monomers that may be used to form the aliphatic conjugated diene monomer unit include, but are not specifically limited to, 1,3-butadiene, 2-methyl-1,3-butadiene (isoprene), and 2,3-dimethyl-1,3-butadiene. Of these aliphatic conjugated diene monomers, 1,3-butadiene and isoprene are preferable. One aliphatic conjugated diene monomer may be used individually, or two or more aliphatic conjugated diene monomers may be used in combination in a freely selected ratio.

The proportion constituted by the aliphatic conjugated diene monomer unit in the polymer A when the amount of all repeating units in the polymer A is taken to be 100 mass% is required to be at least 86 mass% and not more than 95 mass%, is preferably 88 mass% or more, more preferably 89 mass% or more, and even more preferably 91 mass% or more, and is preferably 93 mass% or less, and more preferably 92 mass% or less. Electrode bending resistance decreases if the percentage content of the aliphatic conjugated diene monomer unit is less than 86 mass%. Conversely, good electrolyte solution injectability in secondary battery production cannot be ensured if the percentage content of the aliphatic conjugated diene monomer unit is more than 95 mass%.

[Nitrile group-containing monomer unit]

Examples of nitrile group-containing monomers that may be used to form the nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these nitrile group-containing monomers, acrylonitrile and methacrylonitrile are preferable. One nitrile group-containing monomer may be used individually, or two or more nitrile group-containing monomers may be used in combination in a freely selected ratio.

The proportion constituted by the nitrile group-containing monomer unit in the polymer A when the amount of all repeating units in the polymer A is taken to be 100 mass% is 1 mass% or more, preferably 2 mass% or more, more preferably 3 mass% or more, particularly preferably 6 mass% or more, and most preferably 8 mass% or more, and is 14 mass% or less, preferably 13 mass% or less, more preferably 12 mass% or less, and particularly preferably 10 mass% or less. When the percentage content of the nitrile group-containing monomer unit is 1 mass% or more, deposition of metal, such as lithium, at the surface of an electrode after charging and discharging of a secondary battery can be inhibited. The reason that metal deposition at the surface of an electrode is inhibited through the percentage content of the nitrile group-containing monomer unit in the polymer A being 1 mass% or more is presumed to be as follows. Specifically, setting the percentage content of the nitrile group-containing monomer unit as 1 mass% or more ensures affinity of the polymer A with electrolyte solution. Consequently, diffusion of lithium ions in an electrode mixed material layer is not impeded, and deposition of metal, such as lithium, at the electrode surface (electrode mixed material layer surface) can be inhibited. On the other hand, when the percentage content of the nitrile group-containing monomer unit is 14 mass% or less, the polymer A does not have excessive elasticity, and electrode spring-back can be inhibited.

[Other monomer units]

Examples of monomer units other than the above-described aliphatic conjugated diene monomer unit and nitrile group-containing monomer unit that may be included in the polymer A include, but are not specifically limited to, repeating units derived from known monomers that are copolymerizable with the above-described aliphatic conjugated diene monomer and nitrile group-containing monomer. Specific examples of other monomer units include, but are not specifically limited to, an aromatic vinyl monomer unit, a (meth)acrylic acid ester monomer unit, and a hydrophilic group-containing monomer unit.

One of such monomers may be used individually, or two or more of such monomers may be used in combination. In the present disclosure, "(meth)acryl" is used to indicate "acryl" and/or "methacryl".

Examples of aromatic vinyl monomers that may be used to form the aromatic vinyl monomer unit include styrene, styrenesulfonic acid and salts thereof, $\alpha$-methylstyrene, butoxystyrene, and vinylnaphthalene.

Examples of (meth)acrylic acid ester monomers that may be used to form the (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of hydrophilic group-containing monomers that may be used to form the hydrophilic group-containing monomer unit include polymerizable monomers having a hydrophilic group. Specific examples of hydrophilic group-containing monomers include carboxy group-containing monomers, sulfo group-containing monomers, phosphate group-containing monomers, and hydroxy group-containing monomers.

Examples of carboxy group-containing monomers include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of monocarboxylic acid derivatives include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid.

Examples of dicarboxylic acids include maleic acid, fumaric acid, and itaconic acid.

Examples of dicarboxylic acid derivatives include methylmaleic acid, dimethylmaleic acid, phenylmaleic acid, chloromaleic acid, dichloromaleic acid, fluoromaleic acid, and maleic acid esters such as methylallyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of $\alpha,\beta$-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxy ethyl phosphate, methyl-2-(meth)acryloyloxyethyl phosphate, and ethyl-(meth)acryloyloxyethyl phosphate.

In the present disclosure, "(meth)acryloyl" is used to indicate "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^1-COO-(C_qH_{2q}O)_p-H$ (where p represents an integer of 2 to 9, q represents an integer of 2 to 4, and $R^1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

The percentage content of other monomer units in the polymer A is preferably 0 mass% to less than 10 mass%, more preferably 8 mass% or less, even more preferably 5 mass% or less, and particularly preferably 3 mass% or less.

<<Production of polymer A»

The polymer A can be produced, for example, through polymerization, in an aqueous solvent, of a monomer composition that contains the monomers set forth above. The percentage content of each monomer in the monomer composition is normally the same as the percentage content of the corresponding monomer unit in the target polymer.

The aqueous solvent is not specifically limited so long as the polymer A can be dispersed therein, and may be water used individually or a mixed solvent of water and another solvent.

The mode of polymerization is not specifically limited and may, for example, be any of solution polymerization, suspension polymerization, bulk polymerization, and emulsion polymerization. The method of polymerization may, for example, be any of ionic polymerization, radical polymerization, and living radical polymerization.

Moreover, no specific limitations are placed on molecular weight modifiers, emulsifiers, polymerization initiators, and the like that may be used in polymerization and any of those described in JP 5861698 B may be used, for example.

In particular, t-dodecyl mercaptan and $\alpha$-methylstyrene dimer are preferable, and t-dodecyl mercaptan is more preferable as a molecular weight modifier used in production of the polymer A. The amount of molecular weight modifier that is used when all monomers in the monomer composition used in production of the polymer A are taken to be 100 parts by mass is preferably 0.01 parts by mass or more, more preferably 0.02 parts by mass or more, and even more preferably 0.05 parts by mass or more, and is preferably 1.2 parts by mass or less, more preferably 1.0 parts by mass or less, and even more preferably 0.8 parts by mass or less. Herein, the polymer A is a high diene polymer that includes an aliphatic conjugated diene monomer unit in a high proportion of at least 86 mass% and not more than 95 mass%. Generally, in the case of such a high diene polymer, a crosslinked structure readily forms in polymerization reaction due to the presence of aliphatic conjugated diene monomer, and the molecular weight of the polymer readily increases to a high level, which tends to increase THF-insoluble content described below. However, the use of a molecular weight modifier within any of the ranges set forth above can inhibit molecular weight of the polymer A increasing to a high level and a high level of crosslinking occurring due to the aliphatic conjugated diene monomer unit, and can, therefore, prevent an excessive increase in the THF-insoluble content of the polymer A.

Although no specific limitations are placed on the production conditions of the polymer A, it is preferable that a polymerization reaction is carried out over a long period at a comparatively low temperature. Specifically, the reaction temperature is preferably 0°C or higher, and more preferably 5°C or higher, and is preferably 30°C or lower, more preferably 20°C or lower, and even more preferably 15°C or lower. The reaction time is preferably 8 hours or more, and more preferably 12 hours or more, and is preferably 24 hours or less, and more preferably 20 hours or less. By adopting a reaction temperature and a reaction time such as set forth above, reaction efficiency can be ensured while also inhibiting molecular weight of the polymer A increasing to a high level and a high level of crosslinking occurring due to the aliphatic conjugated diene monomer unit, and thereby preventing an excessive increase in the THF-insoluble content of the polymer A.

«THF-insoluble content»

The THF-insoluble content of the polymer A is preferably 10 mass% or more, more preferably 15 mass% or more, even more preferably 23 mass% or more, and particularly preferably 30 mass% or more, and is preferably 60 mass% or less, more preferably 50 mass% or less, even more preferably 45 mass% or less, particularly preferably 43 mass% or less, and most preferably 40 mass% or less. When the THF-insoluble content of the polymer A is 10 mass% or more, the strength of the polymer A contributing to adhesion is improved, and strength relative to displacement in electrode bending increases. In other words, electrode bending resistance can be further increased. On the other hand, when the THF-insoluble content of the polymer A is 60 mass% or less, affinity of the polymer A with electrolyte solution can be ensured, and electrolyte solution injectability in secondary battery production can be further improved.

The THF-insoluble content of the polymer A can be adjusted by altering the proportion constituted by the aliphatic conjugated diene monomer among monomers in the monomer composition for production of the polymer A and polymerization conditions such as the amount of molecular weight modifier that is used, the reaction temperature, and the reaction time.

«Volume-average particle diameter»

The polymer A preferably exhibits a particulate form in at least the presently disclosed binder composition. In other words, the polymer A is preferably a particulate polymer. The volume-average particle diameter of the polymer A is preferably 0.01 $\mu$m or more, more preferably 0.02 $\mu$m or more, and even more preferably 0.05 $\mu$m or more, and is preferably 0.15 $\mu$m or less, more preferably 0.13 $\mu$m or less, and even more preferably 0.12 $\mu$m or less. When the volume-average particle diameter of the polymer A is 0.01 $\mu$m or more, a homogeneous porous structure of an electrode mixed material layer can be maintained and uneven distribution of metal ions can be inhibited, which can inhibit deposition of metal, such as lithium, at the surface of an electrode after charging and discharging of a secondary battery. On the other hand, when the volume-average particle diameter of the polymer A is 0.15 $\mu$m or less, the polymer A does not have excessive elasticity, and electrode spring-back can be inhibited.

The volume-average particle diameter of the polymer A can be adjusted by altering polymerization conditions such as the amount of emulsifier that is used.

<Polymer B>

The presently disclosed binder composition contains a polymer B in addition to the polymer A. In an electrode produced by forming an electrode mixed material layer on a current collector using a slurry composition for a non-aqueous secondary battery electrode produced using the binder composition, the polymer B holds components contained in the electrode mixed material layer to prevent these components detaching from the electrode mixed material layer (i.e., the polymer B functions as a binder in conjunction with the polymer A set forth above). Combined use of the polymer A and the polymer B as a binder can increase electrode peel strength and further improve electrode bending resistance and electrolyte solution injectability in secondary battery production.

«Chemical composition of polymer B»

The polymer B includes an aliphatic conjugated diene monomer unit as a repeating unit, and also includes an aromatic vinyl monomer unit. However, the polymer B may further include monomer units other than the aliphatic conjugated diene monomer unit and the aromatic vinyl monomer unit (hereinafter, referred to as "other monomer units").

[Aliphatic conjugated diene monomer unit]

Examples of aliphatic conjugated diene monomers that may be used to form the aliphatic conjugated diene monomer unit of the polymer B include the same aliphatic conjugated diene monomers as may be used to form the aliphatic conjugated diene monomer unit of the polymer A set forth above. Of these aliphatic conjugated diene monomers, 1,3-butadiene and isoprene are preferable as aliphatic conjugated diene monomers for forming the aliphatic conjugated diene monomer unit of the polymer B. One aliphatic conjugated diene monomer may be used individually, or two or more aliphatic conjugated diene monomers may be used in combination in a freely selected ratio.

The proportion constituted by the aliphatic conjugated diene monomer unit in the polymer B when the amount of all repeating units in the polymer B is taken to be 100 mass% is required to be at least 20 mass% and not more than 80 mass%, is preferably 25 mass% or more, more preferably 30 mass% or more, and even more preferably 32.5 mass% or more, and is preferably 75 mass% or less, more preferably 60 mass% or less, and even more preferably 50 mass% or less. When the percentage content of the aliphatic conjugated diene monomer unit is 20 mass% or more, bending resistance of an electrode that contains not only the polymer A, but also the polymer B, can be further increased because flexibility of the polymer B is ensured. On the other hand, when the percentage content of the aliphatic conjugated diene monomer unit is 80 mass% or less, affinity of the polymer B with electrolyte solution can be ensured, and electrolyte solution injectability in secondary battery production can be further improved.

[Aromatic vinyl monomer unit]

Examples of aromatic vinyl monomers that may be used to form the aromatic vinyl monomer unit of the polymer B include the same aromatic vinyl monomers as may be used to form other monomer units of the polymer A set forth above. Of these aromatic vinyl monomers, styrene is preferable as an aromatic vinyl monomer for forming the aromatic vinyl monomer unit of the polymer B. One aromatic vinyl monomer may be used individually, or two or more aromatic vinyl monomers may be used in combination in a freely selected ratio.

The proportion constituted by the aromatic vinyl monomer unit in the polymer B is preferably 10 mass% or more, more preferably 15 mass% or more, even more preferably 20 mass% or more, and particularly preferably 25.5 mass% or more, and is preferably 70 mass% or less, more preferably 68 mass% or less, and even more preferably 65 mass% or less. Electrode rigidity can be ensured when the percentage content of the aromatic vinyl monomer unit is 10 mass% or more, whereas electrode peel strength can be improved when the percentage content of the aromatic vinyl monomer unit is 70 mass% or less.

[Other monomer units]

Examples of monomer units other than the above-described aliphatic conjugated diene monomer unit and aromatic vinyl monomer unit that may be included in the polymer B include, but are not specifically limited to, repeating units derived from known monomers that are copolymerizable with aliphatic conjugated diene monomers and aromatic vinyl monomers such as described above. Specific examples of other monomer units include, but are not specifically limited to, a (meth)acrylic acid ester monomer unit and a hydrophilic group-containing monomer unit.

One of such monomers may be used individually, or two or more of such monomers may be used in combination.

Examples of (meth)acrylic acid ester monomers and hydrophilic group-containing monomers that may be used to form the (meth)acrylic acid ester monomer unit and the hydrophilic group-containing monomer unit of the polymer B include the same (meth)acrylic acid ester monomers and hydrophilic group-containing monomers as may be used to form other monomer units of the polymer A. Of these monomers, methyl methacrylate and 2-ethylhexyl acrylate are preferable as (meth)acrylic acid ester monomers that can form the (meth)acrylic acid ester monomer unit of the polymer B. Moreover, carboxy group-containing monomers and hydroxy group-containing monomers are preferable, and itaconic acid and 2-hydroxyethyl acrylate are more preferable as hydrophilic group-containing monomers forming the hydrophilic group-containing monomer unit.

The percentage content of other monomer units in the polymer B is preferably 0 mass% to 10 mass%, more preferably 7 mass% or less, and even more preferably 5 mass% or less.

The polymer B can be produced through polymerization of a monomer composition containing the above-described monomers but is not specifically limited to being produced in this manner. The percentage content of each monomer in the monomer composition is normally the same as the percentage content of the corresponding monomer unit in the target polymer. No specific limitations are placed on the mode of polymerization of the polymer B. For example, any of solution polymerization, suspension polymerization, bulk polymerization, and emulsion polymerization may be used. Moreover, the polymerization reaction may be addition polymerization such as ionic polymerization, radical polymerization, or living radical polymerization. A molecular weight modifier, emulsifier, polymerization initiator, or the like used in polymerization may be the same as typically used and the amount thereof may also be the same as typically used.

«THF-insoluble content»

The THF-insoluble content of the polymer B is preferably 80 mass% or more, more preferably 82 mass% or more, and even more preferably 85 mass% or more, and is preferably 96 mass% or less, more preferably 95 mass% or less, and even more preferably 93 mass% or less. When the THF-insoluble content of the polymer B is 80 mass% or more, tensile fracture strength of the polymer B can be improved and electrode peel strength can be increased. On the other hand, when the THF-insoluble content of the polymer B is 96 mass% or less, tensile fracture strength of the polymer B can be ensured and deposition of metal, such as lithium, at the surface of an electrode after charging and discharging of a secondary battery can be inhibited.

The THF-insoluble content of the polymer B can be adjusted by altering the proportion constituted by the aliphatic conjugated diene monomer among monomers in the monomer composition for production of the polymer B and polymerization conditions such as the amount of molecular weight modifier that is used, the reaction temperature, and the reaction time.

«Volume-average particle diameter»

The polymer B preferably exhibits a particulate form in at least the presently disclosed binder composition. In other words, the polymer B is preferably a particulate polymer. The volume-average particle diameter of the polymer B is preferably 0.01 $\mu$m or more, more preferably 0.02 $\mu$m or more, and even more preferably 0.1 $\mu$m or more, and is preferably 0.5 $\mu$m or less, more preferably 0.3 $\mu$m or less, and even more preferably 0.2 $\mu$m or less. When the volume-average particle diameter of the polymer B is 0.01 $\mu$m or more, a homogeneous porous structure of an electrode mixed material layer can be maintained and uneven distribution of metal ions can be inhibited, which can inhibit deposition of metal, such as lithium, at the surface of an electrode after charging and discharging of a secondary battery. On the other hand, when the volume-average particle diameter of the polymer B is 0.5 $\mu$m or less, specific surface area of the polymer B can be ensured, and electrode peel strength can be increased.
The volume-average particle diameter of the polymer B can be adjusted by altering polymerization conditions such as the amount of emulsifier that is used.

<Mixing ratio of polymer A and polymer B>

In the presently disclosed binder composition, the content of the polymer B in the binder composition as a proportion of the total content of the polymer A and the polymer B is preferably 20 mass% or more, more preferably 35 mass% or more, and even more preferably 40 mass% or more, and is preferably 80 mass% or less, more preferably 75 mass% or less, and even more preferably 70 mass% or less. When the content of the polymer B as a proportion of the total content of the polymer A and the polymer B is 20 mass% or more, good electrolyte solution injectability in secondary battery production can be ensured while further increasing electrode bending resistance. On the other hand, when the content of the polymer B as a proportion of the total content of the polymer A and the polymer B is 80 mass% or less, electrolyte solution injectability in secondary battery production can be further improved.
It should be noted that the presently disclosed binder composition may also contain optional polymers other than the polymer A and the polymer B described above as a binder.

<Dispersion medium>

The dispersion medium contained in the presently disclosed binder composition may be water, for example, but is not specifically limited thereto. The dispersion medium may alternatively be an aqueous solution of any compound or a mixed solution of water and a small amount of an organic solvent.

<Other components>

The presently disclosed binder composition may contain components other than those described above such as reinforcing materials, leveling agents, viscosity modifiers, and additives for electrolyte solution. These other components are not specifically limited so long as they do not affect the battery reactions and may be selected from commonly known components such as those described in WO 2012/115096 A1. One of these components may be used individually, or two or more of these components may be used in combination in a freely selected ratio.

<Production method of binder composition>

No specific limitations are placed on the method by which the presently disclosed binder composition is produced. For example, a dispersion liquid of the polymer A obtained through a polymerization reaction may be used, as produced, as the binder composition. Alternatively, a dispersion liquid of the polymer A, a dispersion liquid of the polymer B, and other optional components may be mixed to produce the binder composition. Note that in a situation in which a dispersion liquid containing a polymer is used in production of the binder composition, liquid content of this dispersion liquid may be used as the dispersion medium of the binder composition.

(Slurry composition for non-aqueous secondary battery electrode)

The presently disclosed slurry composition for a non-aqueous secondary battery electrode contains an electrode active material and the binder composition set forth above, and may optionally further contain other components. In other words, the presently disclosed slurry composition for a non-aqueous secondary battery electrode normally contains an electrode active material, the above-described polymer A and polymer B, and a dispersion medium, and may optionally further contain other components. As a result of containing the binder composition set forth above, the presently disclosed slurry composition can provide an electrode with excellent bending resistance when used in formation of an electrode mixed material layer of the electrode, and can also ensure good electrolyte solution injectability in secondary battery production. Moreover, a non-aqueous secondary battery can be caused to display excellent battery characteristics by using an electrode that is formed using the binder composition containing the polymer A and the polymer B.

Although the following describes, as one example, a case in which the slurry composition for a non-aqueous secondary battery electrode is a slurry composition for a lithium ion secondary battery negative electrode, the presently disclosed slurry composition for a non-aqueous secondary battery electrode is not limited to the following example.

<Electrode active material>

The electrode active material is a material that accepts and donates electrons in an electrode of a secondary battery. The negative electrode active material of a lithium ion secondary battery is normally a material that can occlude and release lithium.

Specific examples of negative electrode active materials for lithium ion secondary batteries include carbon-based negative electrode active materials, metal-based negative electrode active materials, and negative electrode active materials formed by combining these materials.

The carbon-based negative electrode active material can be defined as an active material that contains carbon as its main framework and into which lithium can be inserted (also referred to as "doping"). Examples of the carbon-based negative electrode active material include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

The metal-based negative electrode active material is an active material that contains metal, the structure of which usually contains an element that allows insertion of lithium, and that exhibits a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal. Of these metal-based negative electrode active materials, active materials containing silicon (silicon-based negative electrode active materials) are preferred. One reason for this is that the capacity of a lithium ion secondary battery can be increased though use of a silicon-based negative electrode active material.

Examples of the silicon-based negative electrode active material include silicon (Si), a silicon-containing alloy, SiO, $SiO_x$, and a composite material of conductive carbon and a Si-containing material obtained by coating or combining the Si-containing material with the conductive carbon. One of these silicon-based negative electrode active materials may be used individually, or two or more of these silicon-based negative electrode active materials may be used in combination.

<Binder composition>

The presently disclosed binder composition for a non-aqueous secondary battery electrode containing the polymer A and the polymer B can be used as a binder composition.

The content of the polymer A originating from the binder composition in the slurry composition in terms of solid content per 100 parts by mass of the electrode active material is preferably 0.1 parts by mass or more, and more preferably 0.2 parts by mass or more, and is preferably 5 parts by mass or less, and more preferably 3 parts by mass or less. The content of the polymer B originating from the binder composition in the slurry composition in terms of solid content per 100 parts by mass of the electrode active material is preferably 0.1 parts by mass or more, and more preferably 0.2 parts by mass or more, and is preferably 5 parts by mass or less, and more preferably 3 parts by mass or less.

<Other components>

Examples of other components that may be contained in the slurry composition include, but are not specifically limited to, the same other components as may be contained in the presently disclosed binder composition. The slurry composition may further contain a conductive material such as carbon black. One of such other components may be used individually, or two or more of such other components may be used in combination in a freely selected ratio.

<Production of slurry composition>

The slurry composition set forth above may be produced by dispersing or dissolving the above-described components in a dispersion medium such as water. Specifically, the slurry composition may be produced by mixing the components and the dispersion medium using a mixer such as a ball mill, a sand mill, a bead mill, a pigment disperser, a grinding machine, an ultrasonic disperser, a homogenizer, a planetary mixer, or a FILMIX. Mixing of the above-mentioned components and the dispersion medium may normally be performed for 10 minutes to several hours in a temperature range of room temperature to 80°C. The dispersion medium that is used in production of the slurry composition may be the same type of dispersion medium as in the binder composition. Moreover, the dispersion medium used in production of the slurry composition may include the dispersion medium that was contained in the binder composition.

(Electrode for non-aqueous secondary battery)

The presently disclosed electrode for a non-aqueous secondary battery includes an electrode mixed material layer formed using the slurry composition for a non-aqueous secondary battery electrode set forth above, and normally includes a current collector having the electrode mixed material layer formed thereon. The electrode mixed material layer contains at least an electrode active material and polymer originating from the polymer A, polymer originating from the polymer B, and may optionally further contain other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. In a case in which the polymer A and the polymer B were in a particulate form in the slurry composition, the polymer A and the polymer B may also be in a particulate form, or in any other form, in the electrode mixed material layer formed using the slurry composition.

The presently disclosed electrode for a non-aqueous secondary battery has excellent bending resistance as a result of being produced using a slurry composition that contains the presently disclosed binder composition. Moreover, through production of a secondary battery using the presently disclosed electrode for a non-aqueous secondary battery, good electrolyte solution injectability can be ensured. Consequently, a secondary battery having excellent battery characteristics is obtained through use of this electrode.

<Production method of electrode>

The presently disclosed electrode for a non-aqueous secondary battery can be produced, for example, through a step of applying the above-described slurry composition onto the current collector (application step) and a step of drying the slurry composition that has been applied onto the current collector to form an electrode mixed material layer on the current collector (drying step).

«Application step»

The slurry composition can be applied onto the current collector by a commonly known method without any specific limitations. Specific examples of application methods that can be used include doctor blading, dip coating, reverse roll coating, direct roll coating, gravure coating, extrusion coating, and brush coating. The slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may be made of, for example, iron, copper, aluminum, nickel, stainless steel, titanium, tantalum, gold, or platinum. One of these materials may be used individually, or two or more of these materials may be used in combination in a freely selected ratio.

<<Drying step>>

The slurry composition that has been applied onto the current collector may be dried by any commonly known method without any specific limitations. Examples of drying methods that can be used include drying by warm, hot, or low-humidity air; drying in a vacuum; and drying by irradiation with infrared light, electron beams, or the like. Drying of the slurry composition on the current collector in this manner forms an electrode mixed material layer on the current collector and thereby provides an electrode for a secondary battery that includes the current collector and the electrode mixed material layer.

After the drying step, the electrode mixed material layer may be further subjected to pressing treatment, such as mold pressing or roll pressing. This pressing treatment can improve peel strength of the electrode. Furthermore, in a case in which the electrode mixed material layer contains a curable polymer, the polymer is preferably cured after the electrode mixed material layer has been formed.

(Non-aqueous secondary battery)

The presently disclosed non-aqueous secondary battery includes a positive electrode, a negative electrode, an electrolyte solution, and a separator, wherein the presently disclosed electrode for a non-aqueous secondary battery is used as at least one of the positive electrode and the negative electrode. The presently disclosed non-aqueous secondary battery has excellent battery characteristics as a result of including the presently disclosed electrode for a non-aqueous secondary battery.

The presently disclosed secondary battery is preferably a secondary battery in which the presently disclosed electrode for a secondary battery is used as the negative electrode. Although the following describes, as one example, a case in which the secondary battery is a lithium ion secondary battery, the presently disclosed secondary battery is not limited to the following example.

<Electrodes>

As explained above, the presently disclosed electrode for a non-aqueous secondary battery is used as at least one of the positive electrode and the negative electrode. In other words, the positive electrode of the lithium ion secondary battery may be the presently disclosed electrode and the negative electrode of the lithium ion secondary battery may be a known negative electrode other than the presently disclosed electrode. Alternatively, the negative electrode of the lithium ion secondary battery may be the presently disclosed electrode and the positive electrode of the lithium ion secondary battery may be a known positive electrode other than the presently disclosed electrode. Further alternatively, the positive electrode and the negative electrode of the lithium ion secondary battery may both be the presently disclosed electrode.

Note that when a known electrode other than the presently disclosed electrode for a non-aqueous secondary battery is used, this electrode may be an electrode that is obtained by forming an electrode mixed material layer on a current collector by a known production method.

<Electrolyte solution>

The electrolyte solution is normally an organic electrolyte solution obtained by dissolving a supporting electrolyte in an organic solvent. The supporting electrolyte of a lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable, and $LiPF_6$ is particularly preferable as these lithium salts readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Suitable examples of organic solvents that may be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Known additives such as vinylene carbonate, fluoroethylene carbonate, and ethyl methyl sulfone may be added to the electrolyte solution.

<Separator>

The separator may be a separator such as described in JP 2012-204303 A, for example, but is not specifically limited thereto. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the capacity per volume.

<Production method of secondary battery>

The presently disclosed secondary battery may be produced, for example, by stacking the positive electrode and the negative electrode with the separator in-between, performing rolling, folding, or the like of the resultant laminate in accordance with the battery shape as necessary to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.
In the examples and comparative examples, the following methods were used to measure and evaluate the THF-insoluble content and volume-average particle diameter of a polymer, the electrolyte solution injectability in secondary battery production, the bending resistance, spring-back resistance, and peel strength of a negative electrode, and the amount of lithium deposition on a negative electrode.

<THF-insoluble content>

An obtained water dispersion of a polymer was dried in an environment having a humidity of 50% and a temperature of 23°C to 25°C to produce a film of 3 ±0.3 mm in thickness. The produced film was cut into 5 mm squares to prepare film pieces. Approximately 1 g of these film pieces were precisely weighed out. The weight of the precisely weighed films pieces was taken to be W0. Next, the precisely weighed film pieces were immersed in 100 g of tetrahydrofuran (THF) for 24 hours at 25°C. The film pieces were subsequently pulled out of the THF and were vacuum dried for 3 hours at 105°C. The weight W1 of the dried film pieces (weight of insoluble content) was measured. The THF-insoluble content (%) was calculated by the following formula.

$$\text{THF-insoluble content (\%)} = W1/W0 \times 100$$

<Volume-average particle diameter>

The solid content concentration of an obtained water dispersion of a polymer was adjusted to 0.1 mass%. A particle diameter distribution (volume basis) was then measured with respect to the water dispersion of the polymer that had undergone solid content concentration adjustment using a laser diffraction particle diameter distribution analyzer (produced by Beckman Coulter, Inc.; product name: LS-230). In the obtained particle diameter distribution, the particle diameter at which cumulative volume calculated from the small diameter end of the distribution reached 50% was determined as the volume-average particle diameter (D50) of the polymer (particulate polymer).

<Electrolyte solution injectability>

An electrolyte solution (solvent: propylene carbonate; electrolyte: $LiPF_6$ of 1 M in concentration) was dripped onto the surface at the negative electrode mixed material layer-side of a produced negative electrode (post-pressing) in an amount of 1 μL. The time from this dripping until the electrolyte solution penetrated into the negative electrode mixed material layer and disappeared from the surface (penetration time) was measured, and was evaluated by the following standard. A shorter penetration time indicates better electrolyte solution injectability in production of a secondary battery using the negative electrode.

A: Penetration time of less than 300 s
B: Penetration time of at least 300 s and less than 350 s
C: Penetration time of at least 350 s and less than 400 s
D: Penetration time of 400 s or more

<Bending resistance>

A produced negative electrode (post-pressing) was wound around a cylinder made of stainless steel that had a diameter of 3 mm, and the occurrence of cracking in the surface of the negative electrode mixed material layer during this winding was visually inspected. In a case in which cracking was not observed, the same operation was performed using stainless steel cylinders having smaller diameters of 2 mm and 1 mm in this order. The cylinder diameter at which cracking was first observed in the negative electrode mixed material layer surface of the negative electrode (cylinder diameter at which cracking occurs) was recorded, and was evaluated by the following standard. A smaller value for the cylinder diameter at which cracking occurs indicates better negative electrode bending resistance. Moreover, when cracking does not occur even using a cylinder of 1 mm in diameter, this indicates that negative electrode bending resistance is especially good.

A: Cracking not observed even at cylinder diameter of 1 mm
B: Cracking occurs at cylinder diameter of 1 mm
C: Cracking occurs at cylinder diameter of 2 mm
D: Cracking occurs at cylinder diameter of 3 mm

<Spring-back resistance>

The thickness of a produced negative electrode (post-pressing) was measured and was taken to be T1. After this measurement, the negative electrode was left for three days in a dry room in which the dew point temperature was managed to -40°C or lower. The thickness of the negative electrode was subsequently remeasured and was taken to be T2. The rate of change in thickness of the negative electrode (%) (= T2/T1 × 100) was calculated, and was evaluated by the following standard. A smaller rate of change in thickness indicates better negative electrode spring-back resistance.

A: Rate of change in negative electrode thickness of less than 105%
B: Rate of change in negative electrode thickness of at least 105% and less than 108%
C: Rate of change in negative electrode thickness of 108% or more

<Peel strength>

A produced negative electrode (post-pressing) was cut out as a rectangle of 100 mm in length by 10 mm in width to obtain a specimen. The specimen was placed with the surface of the negative electrode mixed material layer underneath, and cellophane tape was affixed to the surface of the negative electrode mixed material layer. Tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. This measurement was made three times and an average value of the stress was determined. The average value was taken to be the peel strength. A larger peel strength indicates better close adhesion strength between the negative electrode mixed material layer and the current collector.

A: Peel strength of 24 N/m or more
B: Peel strength of at least 19 N/m and less than 24 N/m
C: Peel strength of less than 19 N/m

<Amount of lithium deposition>

A produced lithium ion secondary battery was left at rest for 5 hours in a 25°C environment after electrolyte solution injection. The lithium ion secondary battery was subsequently charged to a cell voltage of 3.65 V by a 0.2C constant-current method in a 25°C environment and was then subjected to 12 hours of aging in a 60°C environment. Next, the lithium ion secondary battery was discharged to a cell voltage of 3.00 V by a 0.2C constant-current method in a 25°C environment. The lithium ion secondary battery was further subjected to CC-CV charging with a 0.2C constant current (upper limit cell voltage 4.30 V) and CC discharging with a 0.2C constant current (lower limit voltage 3.00 V).

Thereafter, the lithium ion secondary battery was subjected to 10 cycles of 0.5C constant-current charging and discharging between 4.30 V and 3.00 V in a 25°C environment. In addition, the lithium ion secondary battery was subjected to CC-CV charging with a 0.5C constant current (upper limit cell voltage 4.30 V) in a 25°C environment. The lithium ion secondary battery was then disassembled in an inert atmosphere to remove the negative electrode. The removed negative electrode was washed with diethyl carbonate, and then the area over which lithium was deposited was measured as percentage area (%) relative to negative electrode area (mixed material layer surface), and was evaluated by the following standard.

A: Percentage area of 0% (no lithium deposition)
B: Percentage area of more than 0% and less than 50%
C: Percentage area of at least 50% and not more than 100%

(Example 1)

<Production of polymer A>

A reactor was charged with 180 parts of deionized water, 25 parts of sodium dodecylbenzenesulfonate aqueous solution (concentration 10%) as an emulsifier, 8 parts of acrylonitrile as a nitrile group-containing monomer, 1 part of methacrylic acid as a carboxy group-containing monomer, and 0.25 parts of t-dodecyl mercaptan as a molecular weight modifier in this order. Next, gas inside the reactor was purged with nitrogen three times, and then 91 parts of 1,3-butadiene was added as an aliphatic conjugated diene monomer. With the reactor maintained at 10°C, 0.1 parts of cumene hydroperoxide was added as a polymerization initiator to initiate a polymerization reaction and the polymerization reaction was continued for 16 hours under stirring. Next, 0.1 parts of hydroquinone aqueous solution (concentration 10%) was added as a polymerization inhibitor to terminate the polymerization reaction and then residual monomer was removed using a rotary evaporator with a water temperature of 60°C to yield a water dispersion of a polymer A (particulate polymer). The THF-insoluble content and volume-average particle diameter of this polymer A were measured. The results are shown in Table 1.

<Production of polymer B>

A reactor was charged with 150 parts of deionized water, 25 parts of sodium dodecylbenzenesulfonate aqueous solution (concentration 10%) as an emulsifier, 63 parts of styrene as an aromatic vinyl monomer, 3.5 parts of itaconic acid as a carboxy group-containing monomer, 1 part of 2-hydroxyethyl acrylate as a hydroxy group-containing monomer, and 0.5 parts of t-dodecyl mercaptan as a molecular weight modifier in this order. Next, gas inside the reactor was purged with nitrogen three times, and then 32.5 parts of 1,3-butadiene was added as an aliphatic conjugated diene monomer. With the reactor maintained at 60°C, 0.5 parts of potassium persulfate was added as a polymerization initiator to initiate a polymerization reaction and the polymerization reaction was continued under stirring. At the point at which the polymerization conversion rate reached 96%, cooling was performed and 0.1 parts of hydroquinone aqueous solution (concentration 10%) was added as a polymerization inhibitor to terminate the polymerization reaction. Thereafter, residual monomer was removed using a rotary evaporator with a water temperature of 60°C to yield a water dispersion of a polymer B (particulate polymer). The THF-insoluble content and volume-average particle diameter of this polymer B were measured. The results are shown in Table 1.

<Production of binder composition>

The water dispersion of the polymer A and the water dispersion of the polymer B were added into a vessel such that the polymer A and the polymer B had a solid content ratio of polymer A:polymer B = 50:50. These materials were stirred for 1 hour using a Three-One Motor to obtain a binder composition.

<Production of slurry composition>

A planetary mixer equipped with a disper blade was charged with 70 parts of artificial graphite (produced by Hitachi Chemical Co., Ltd.; product name: MAG-E) and 25.6 parts of natural graphite (produced by Nippon Carbon Co., Ltd.; product name: 604A) as negative electrode active materials, 1 part of carbon black (produced by Timcal Ltd.;

product name: Super C65) as a conductive material, and 1 part in terms of solid content of a 1% aqueous solution of carboxymethyl cellulose (produced by Nippon Paper Industries Co., Ltd.; product name: MAC-350HC) as a viscosity modifier to obtain a mixture. The obtained mixture was adjusted to a solid content concentration of 58% with deionized water and was subsequently mixed for 60 minutes at 25°C. Next, the mixture was adjusted to a solid content concentration of 52% with deionized water and was then further mixed for 15 minutes at 25°C to yield a liquid mixture. Deionized water and 1 part in terms of solid content of the binder composition for a non-aqueous secondary battery electrode were added to the resultant mixture, and the final solid content concentration was adjusted to 48%. Further mixing was performed for 10 minutes and then a defoaming process was carried out under reduced pressure to yield a slurry composition for a non-aqueous secondary battery negative electrode having good fluidity.

<Production of negative electrode>

The obtained slurry composition for a non-aqueous secondary battery negative electrode was applied onto copper foil (current collector) of 20 $\mu$m in thickness using a comma coater such that a negative electrode mixed material layer obtained after drying had a weight per unit area of 11 mg/cm$^2$ and a density of 1.05 g/cm$^3$. The applied slurry composition was dried by conveying the copper foil inside a 60°C oven for 2 minutes at a speed of 0.5 m/min. Thereafter, heat treatment was performed for 2 minutes at 120°C to obtain a pre-pressing negative electrode web. The pre-pressing negative electrode web was rolled by roll pressing to obtain a post-pressing negative electrode including a negative electrode mixed material layer of 1.65 g/cm$^3$ in density.

The electrolyte solution injectability in secondary battery production, and the bending resistance, spring-back resistance, and peel strength of the negative electrode were evaluated. The results are shown in Table 1.

<Production of positive electrode>

A mixture of 100 parts of LiCoO$_2$ having a volume-average particle diameter of 12 $\mu$m as a positive electrode active material, 2 parts of acetylene black (produced by Denki Kagaku Kogyo Kabushiki Kaisha; product name: HS-100) as a conductive material, 2 parts in terms of solid content of polyvinylidene fluoride (produced by Kureha Corporation; product name: #7208) as a binder, and N-methylpyrrolidone as a solvent was prepared with a total solid content concentration of 70%. These materials were mixed using a planetary mixer to obtain a slurry composition for a non-aqueous secondary battery positive electrode.

The obtained slurry composition for a non-aqueous secondary battery positive electrode was applied onto aluminum foil (current collector) of 20 $\mu$m in thickness using a comma coater such as to have a thickness of approximately 150 $\mu$m after drying. The applied slurry composition was dried by conveying the aluminum foil inside a 60°C oven for 2 minutes at a speed of 0.5 m/min. Thereafter, heat treatment was performed for 2 minutes at 120°C to obtain a positive electrode web.

The resultant positive electrode web was rolled by a roll press to obtain a positive electrode including a positive electrode mixed material layer.

<Preparation of separator>

A single layer separator made of polypropylene (produced by Celgard, LLC.; product name: CELGARD 2500) was cut to 120 cm $\times$ 5.5 cm.

<Production of secondary battery>

The obtained post-pressing positive electrode was cut out as a 49 cm $\times$ 5 cm rectangle and was placed with the surface at the positive electrode mixed material layer-side on top. The separator that had been cut out to 120 cm $\times$ 5.5 cm was placed on the positive electrode mixed material layer such that the positive electrode was positioned at the longitudinal direction lefthand side of the separator. The obtained post-pressing negative electrode was cut out as a 50 cm $\times$ 5.2 cm rectangle and was placed on the separator such that the surface at the negative electrode mixed material layer-side of the negative electrode faced the separator and such that the negative electrode was positioned at the longitudinal direction right-hand side of the separator. The resultant laminate was wound by a winding machine to obtain a roll. The roll was packed into an aluminum packing case serving as a battery case. An electrolyte solution (solvent: ethylene carbonate/diethyl carbonate/vinylene carbonate = 68.5/30/1.5 (volume ratio); electrolyte: LiPF$_6$ of 1 M in concentration) was injected into the aluminum packing case such that air did not remain, and then an opening of the aluminum packing case was closed by heat sealing at 150°C to produce a wound lithium ion secondary battery having a capacity of 800 mAh. The amount of lithium deposition on the negative electrode was evaluated. The results are shown in Table 1.

(Example 2)

A binder composition, a slurry composition, a negative electrode, a positive electrode, a separator, and a secondary battery were produced in the same way as in Example 1 with the exception that in production of the polymer A, the amount of 1,3-butadiene was changed to 86 parts and the amount of acrylonitrile was changed to 13 parts. Each evaluation was performed in the same way as in Example 1. The results are shown in Table 1.

(Example 3)

A binder composition, a slurry composition, a negative electrode, a positive electrode, a separator, and a secondary battery were produced in the same way as in Example 1 with the exception that in production of the polymer A, the amount of 1,3-butadiene was changed to 93 parts and the amount of acrylonitrile was changed to 6 parts. Each evaluation was performed in the same way as in Example 1. The results are shown in Table 1.

(Example 4)

A binder composition, a slurry composition, a negative electrode, a positive electrode, a separator, and a secondary battery were produced in the same way as in Example 1 with the exception that isoprene was used instead of 1,3-butadiene in production of the polymer A. Each evaluation was performed in the same way as in Example 1. The results are shown in Table 1.

(Examples 5 and 6)

A binder composition, a slurry composition, a negative electrode, a positive electrode, a separator, and a secondary battery were produced in the same way as in Example 1 with the exception that the amount of sodium dodecylbenzenesulfonate aqueous solution (concentration 10%) used as an emulsifier in production of the polymer A was changed to 40 parts (Example 5) or 15 parts (Example 6). Each evaluation was performed in the same way as in Example 1.

(Example 7)

A binder composition, a slurry composition, a negative electrode, a positive electrode, a separator, and a secondary battery were produced in the same way as in Example 1 with the exception that in production of the polymer B, the amount of 1,3-butadiene was changed to 22 parts and the amount of styrene was changed to 73.5 parts. Each evaluation was performed in the same way as in Example 1. The results are shown in Table 1.

(Example 8)

A binder composition, a slurry composition, a negative electrode, a positive electrode, a separator, and a secondary battery were produced in the same way as in Example 1 with the exception that in production of the polymer B, the amount of 1,3-butadiene was changed to 70 parts and the amount of styrene was changed to 25.5 parts. Each evaluation was performed in the same way as in Example 1. The results are shown in Table 1.

(Examples 9 and 10)

A binder composition, a slurry composition, a negative electrode, a positive electrode, a separator, and a secondary battery were produced in the same way as in Example 1 with the exception that the amount of sodium dodecylbenzenesulfonate aqueous solution (concentration 10%) used as an emulsifier in production of the polymer B was changed to 15 parts (Example 9) or 40 parts (Example 10). Each evaluation was performed in the same way as in Example 1.

(Examples 11 and 12)

A binder composition, a slurry composition, a negative electrode, a positive electrode, a separator, and a secondary battery were produced in the same way as in Example 1 with the exception that the mixing ratio of the water dispersion of the polymer A and the water dispersion of the polymer B in production of the binder composition was changed such that polymer A:polymer B = 20:80 (Example 11) or polymer A:polymer B = 65:35 (Example 12). Each evaluation was performed in the same way as in Example 1. The results are shown in Table 1.

(Reference Example 13)

A slurry composition, a negative electrode, a positive electrode, a separator, and a secondary battery were produced in the same way as in Example 1 with the exception that the water dispersion of the polymer A was used as a binder composition without producing the polymer B. Each evaluation was performed in the same way as in Example 1.

(Comparative Example 1)

A binder composition, a slurry composition, a negative electrode, a positive electrode, a separator, and a secondary battery were produced in the same way as in Example 1 with the exception that in production of the polymer A, the amount of 1,3-butadiene was changed to 85 parts, 14 parts of styrene was used instead of acrylonitrile, and the amount of t-dodecyl mercaptan used as a molecular weight modifier was changed to 0.35 parts. Each evaluation was performed in the same way as in Example 1. The results are shown in Table 1.

(Comparative Example 2)

A binder composition, a slurry composition, a negative electrode, a positive electrode, a separator, and a secondary battery were produced in the same way as in Example 1 with the exception that in production of the polymer A, the amount of 1,3-butadiene was changed to 96 parts, 3 parts of styrene was used instead of acrylonitrile, and the amount of t-dodecyl mercaptan used as a molecular weight modifier was changed to 0.35 parts. Each evaluation was performed in the same way as in Example 1. The results are shown in Table 1.

(Comparative Example 3)

A slurry composition, a negative electrode, a positive electrode, a separator, and a secondary battery were produced in the same way as in Comparative Example 1 with the exception that the water dispersion of the polymer A was used as a binder composition without producing the polymer B. Each evaluation was performed in the same way as in Example 1.

In Table 1, shown below:

"BD" indicates 1,3-butadiene unit;
"IP" indicates isoprene unit;
"AN" indicates acrylonitrile unit;
"MAA" indicates methacrylic acid unit;
"ST" indicates styrene unit;
"IA" indicates itaconic acid unit;
"2-HEA" indicates 2-hydroxyethyl acrylate unit; and
"TDM" indicates t-dodecyl mercaptan.

Table 1

| | | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 |
|---|---|---|---|---|---|---|---|---|---|---|---|---|---|---|---|---|---|---|
| Chemical composition | Aliphatic conjugated diene monomer unit | BD [mass %] | 91 | 86 | 93 | - | 91 | 91 | 91 | 91 | 91 | 91 | 91 | 91 | 91 | 85 | 96 | 85 |
| | | IP [mass %] | - | - | - | 91 | - | - | - | - | - | - | - | - | - | - | - | - |
| | Nitrile group-containing monomer unit | AN [mass %] | 8 | 13 | 6 | 8 | 8 | 8 | 8 | 8 | 8 | 8 | 8 | 8 | 8 | - | - | - |
| | Other monomer units | MAA [mass %] | 1 | 1 | 1 | 1 | 1 | 1 | 1 | 1 | 1 | 1 | 1 | 1 | 1 | 1 | 1 | 1 |
| | | ST [mass %] | - | - | - | - | - | - | - | - | - | - | - | - | - | - | 3 | 14 |
| Molecular weight modifier | Type | | TDM | TDM | TDM | TDM | TDM | TDM | TDM | TDM | TDM | TDM | TDM | TDM | TDM | TDM | TDM | TDM |
| | Used amount (based on 100 parts of all monomers) [parts by mass] | | 0.25 | 0.25 | 0.25 | 0.25 | 0.25 | 0.25 | 0.25 | 0.25 | 0.25 | 0.25 | 0.25 | 0.25 | 0.25 | 0.35 | 0.35 | 0.35 |
| Polymer A | Volume-average particle diameter [μm] | | 0.08 | 0.08 | 0.08 | 0.08 | 0.04 | 0.14 | 0.08 | 0.08 | 0.08 | 0.08 | 0.08 | 0.08 | 0.08 | 0.09 | 0.09 | 0.09 |
| | THF-insoluble content [mass%] | | 32 | 23 | 43 | 37 | 30 | 34 | 32 | 32 | 32 | 32 | 32 | 32 | 32 | 55 | 65 | 55 |

| | | | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 |
|---|---|---|---|---|---|---|---|---|---|---|---|---|---|---|---|---|---|---|---|
| Binder composition | | Amount (based on 100 parts of electrode active material) [parts by mass] | | 0.5 | 0.5 | 0.5 | 0.5 | 0.5 | 0.5 | 0.5 | 0.5 | 0.5 | 0.5 | 0.2 | 0.65 | 1.0 | 0.5 | 0.5 | 1.0 |
| | Polymer B | Chemical composition | Aliphatic conjugated diene monomer unit — BD [mass %] | 32.5 | 32.5 | 32.5 | 32.5 | 32.5 | 32.5 | 22 | 70 | 32.5 | 32.5 | 32.5 | 32.5 | - | 32.5 | 32.5 | - |
| | | | Aromatic vinyl monomer unit — ST [mass %] | 63 | 63 | 63 | 63 | 63 | 63 | 73.5 | 25.5 | 63 | 63 | 63 | 63 | - | 63 | 63 | - |
| | | | Other monomer units — IA [mass %] | 3.5 | 3.5 | 3.5 | 3.5 | 3.5 | 3.5 | 3.5 | 3.5 | 3.5 | 3.5 | 3.5 | 3.5 | - | 3.5 | 3.5 | - |
| | | | Other monomer units — 2-HEA [mass %] | 1 | 1 | 1 | 1 | 1 | 1 | 1 | 1 | 1 | 1 | 1 | 1 | - | 1 | 1 | - |
| | | Volume-average particle diameter [μm] | | 0.15 | 0.15 | 0.15 | 0.15 | 0.15 | 0.15 | 0.15 | 0.15 | 0.25 | 0.08 | 0.15 | 0.15 | - | 0.15 | 0.15 | - |
| | | THF-insoluble content [mass%] | | 91 | 91 | 91 | 91 | 91 | 91 | 82 | 94 | 91 | 91 | 91 | 91 | - | 91 | 91 | - |
| | | Amount (based on 100 parts of electrode active material) [parts by mass] | | 0.5 | 0.5 | 0.5 | 0.5 | 0.5 | 0.5 | 0.5 | 0.5 | 0.5 | 0.5 | 0.8 | 0.35 | - | 0.5 | 0.5 | - |
| | Mixing ratio (polymer A/polymer B) | | | 50/50 | 50/50 | 50/50 | 50/50 | 50/50 | 50/50 | 50/50 | 50/50 | 50/50 | 50/50 | 20/80 | 65/35 | 100/0 | 50/50 | 50/50 | 100/0 |

EP 3 480 876 B1

21

| | | Exam-ple 1 | Exam-ple 2 | Exam-ple 3 | Exam-ple 4 | Exam-ple 5 | Exam-ple 6 | Exam-ple 7 | Exam-ple 8 | Exam-ple 9 | Exam-ple 10 | Exam-ple 11 | Exam-ple 12 | Exam-ple 13 | Compar-ative Ex-ample 1 | Compar-ative Ex-ample 2 | Compar-ative Ex-ample 3 |
|---|---|---|---|---|---|---|---|---|---|---|---|---|---|---|---|---|---|
| Evalua-tions | Electrolyte solution injectability | A | A | B | A | A | A | A | B | A | A | B | A | B | C | D | D |
| | Bending resistance | A | B | A | A | A | A | B | A | A | A | A | B | B | C | C | D |
| | Amount of lithium deposition | A | A | A | A | B | A | A | B | A | B | A | A | A | C | C | C |
| | Spring-back resistance | A | B | A | A | A | B | A | A | A | A | A | A | A | C | C | C |
| | Peel strength | A | A | A | A | A | A | B | A | B | A | A | A | B | B | B | B |

As can be seen from Table 1, it was possible to obtain a negative electrode having excellent bending resistance and ensure good electrolyte solution injectability in secondary battery production in Examples 1 to 12 in which a binder composition containing a polymer A that included an aliphatic conjugated diene monomer unit in a proportion of at least 86 mass% and not more than 95 mass% and a nitrile group-containing monomer unit in a proportion of at least 1 mass% and not more than 14 mass% was used. It can also be seen that the negative electrodes in Examples 1 to 12 had excellent peel strength, displayed sufficient inhibition of spring-back, and the amount of lithium deposition thereon was small. In contrast, it can be seen from Table 1 that negative electrode bending resistance, in particular, decreased in Comparative Examples 1 and 3 in which a binder composition containing a polymer A that included an aliphatic conjugated diene monomer unit in a proportion of less than 86 mass% was used. Moreover, it can be seen from Table 1 that adequate electrolyte solution injectability in secondary battery production, in particular, could not be ensured in Comparative Example 2 in which a binder composition containing a polymer A that included an aliphatic conjugated diene monomer unit in a proportion of more than 95 mass% was used.

INDUSTRIAL APPLICABILITY

According to the present disclosure, it is possible to provide a binder composition for a non-aqueous secondary battery electrode and a slurry composition for a non-aqueous secondary battery electrode that can form an electrode having excellent bending resistance and can ensure good electrolyte solution injectability in secondary battery production.

Moreover, according to the present disclosure, it is possible to provide an electrode for a non-aqueous secondary battery that has excellent bending resistance and can ensure good electrolyte solution injectability in secondary battery production, and a non-aqueous secondary battery including this electrode for a non-aqueous secondary battery.

**Claims**

1. A binder composition for a non-aqueous secondary battery electrode comprising a polymer A and a polymer B, wherein

   the polymer A includes an aliphatic conjugated diene monomer unit in a proportion of at least 86 mass% and not more than 95 mass% and a nitrile group-containing monomer unit in a proportion of at least 1 mass% and not more than 14 mass%, and
   the polymer B includes an aliphatic conjugated diene monomer unit in a proportion of at least 20 mass% and not more than 80 mass% and an aromatic vinyl monomer unit.

2. The binder composition for a non-aqueous secondary battery electrode according to claim 1, wherein the polymer A has a volume-average particle diameter of at least 0.01 $\mu$m and not more than 0.15 $\mu$m.

3. The binder composition for a non-aqueous secondary battery electrode according to claim 1 or 2, wherein the polymer B has a volume-average particle diameter of at least 0.01 $\mu$m and not more than 0.5 $\mu$m.

4. The binder composition for a non-aqueous secondary battery electrode according to any one of claims 1 to 3, wherein the polymer B has a THF-insoluble content of at least 80 mass% and not more than 96 mass%.

5. The binder composition for a non-aqueous secondary battery electrode according to any one of claims 1 to 4, wherein content of the polymer B is at least 20 mass% and not more than 80 mass% of total content of the polymer A and the polymer B.

6. A slurry composition for a non-aqueous secondary battery electrode comprising:

   an electrode active material; and
   the binder composition for a non-aqueous secondary battery electrode according to any one of claims 1 to 5.

7. An electrode for a non-aqueous secondary battery comprising an electrode mixed material layer formed using the slurry composition for a non-aqueous secondary battery electrode according to claim 6.

8. A non-aqueous secondary battery comprising a positive electrode, a negative electrode, an electrolyte solution, and a separator, wherein
   at least one of the positive electrode and the negative electrode is the electrode for a non-aqueous secondary battery according to claim 7.

**Patentansprüche**

1. Bindemittelzusammensetzung für eine nicht wässrige Sekundärbatterie-Elektrode, umfassend ein Polymer A und ein Polymer B, wobei

   das Polymer A eine aliphatische konjugierte Dien-Monomereinheit in einem Anteil von mindestens 86 Massen-% und nicht mehr als 95 Massen-% und eine Nitrilgruppen-haltige Monomereinheit in einem Anteil von mindestens 1 Massen-% und nicht mehr als 14 Massen-% enthält, und
   das Polymer B eine aliphatische konjugierte Dien-Monomereinheit in einem Anteil von mindestens 20 Massen-% und nicht mehr als 80 Massen-% und eine aromatische Vinyl-Monomereinheit enthält.

2. Bindemittelzusammensetzung für eine nicht wässrige Sekundärbatterie-Elektrode nach Anspruch 1, wobei das Polymer A einen volumengemittelten Teilchendurchmesser von mindestens 0,01 μm und nicht mehr als 0,15 μm aufweist.

3. Bindemittelzusammensetzung für eine nicht wässrige Sekundärbatterie-Elektrode nach Anspruch 1 oder 2, wobei das Polymer B einen volumengemittelten Teilchendurchmesser von mindestens 0,01 μm und nicht mehr als 0,5 μm aufweist.

4. Bindemittelzusammensetzung für eine nicht wässrige Sekundärbatterie-Elektrode nach irgend einem der Ansprüche 1 bis 3, wobei das Polymer B einen THF-unlöslichen Anteil von mindestens 80 Massen-% und nicht mehr als 96 Massen-% aufweist.

5. Bindemittelzusammensetzung für eine nicht wässrige Sekundärbatterie-Elektrode nach irgend einem der Ansprüche 1 bis 4, wobei der Gehalt des Polymers B mindestens 20 Massen-% und nicht mehr als 80 Massen-% des Gesamtgehalts des Polymers A und des Polymers B beträgt.

6. Aufschlämmungszusammensetzung für eine nicht wässrige Sekundärbatterie-Elektrode, umfassend:

   ein elektrodenaktives Material; und
   die Bindemittelzusammensetzung für eine nicht wässrige Sekundärbatterie-Elektrode nach irgend einem der Ansprüche 1 bis 5.

7. Elektrode für eine nicht wässrige Sekundärbatterie, umfassend eine unter Verwendung der Aufschlämmungszusammensetzung für eine nicht wässrige Sekundärbatterie-Elektrode nach Anspruch 6 gebildete Elektroden-Mischmaterialschicht.

8. Nicht wässrige Sekundärbatterie umfassend eine positive Elektrode, eine negative Elektrode, eine Elektrolytlösung und einen Separator, wobei
   mindestens eine der positiven Elektrode und der negativen Elektrode die Elektrode für eine nicht wässrige Sekundärbatterie nach Anspruch 7 ist.

**Revendications**

1. Composition de liant pour une électrode de batterie rechargeable non aqueuse comprenant un polymère A et un polymère B, dans laquelle

   le polymère A contient un motif monomère diène conjugué aliphatique en une proportion d'au moins 86 % en masse et d'au plus 95 % en masse et un motif monomère contenant un groupe nitrile en une proportion d'au moins 1 % en masse et d'au plus 14 % en masse, et
   le polymère B contient un motif monomère diène conjugué aliphatique en une proportion d'au moins 20 % en masse et d'au plus 80 % en masse et un motif monomère vinyle aromatique.

2. Composition de liant pour une électrode de batterie rechargeable non aqueuse selon la revendication 1, dans laquelle le polymère A a un diamètre de particule moyen en volume d'au moins 0,01 μm et d'au plus 0,15 μm.

3. Composition de liant pour une électrode de batterie rechargeable non aqueuse selon la revendication 1 ou 2, dans laquelle le polymère B a un diamètre de particule moyen en volume d'au moins 0,01 μm et d'au plus 0,5 μm.

4. Composition de liant pour une électrode de batterie rechargeable non aqueuse selon l'une quelconque des revendications 1 à 3, dans laquelle le polymère B a une teneur en composants insolubles dans le THF d'au moins 80 % en masse et d'au plus 96 % en masse.

5. Composition de liant pour une électrode de batterie rechargeable non aqueuse selon l'une quelconque des revendications 1 à 4, dans laquelle la teneur en le polymère B est d'au moins 20 % en masse et d'au plus 80 % en masse de la teneur totale en le polymère A et le polymère B.

6. Composition de bouillie pour une électrode de batterie rechargeable non aqueuse comprenant :

   un matériau actif d'électrode ; et
   une composition de liant pour une électrode de batterie rechargeable non aqueuse selon l'une quelconque des revendications 1 à 5.

7. Electrode pour une batterie rechargeable non aqueuse comprenant une couche de matériau mixte d'électrode formée par utilisation de la composition de bouillie pour une électrode de batterie rechargeable non aqueuse selon la revendication 6.

8. Batterie rechargeable non aqueuse comprenant une électrode positive, une électrode négative, une solution d'électrolyte, et un séparateur, dans laquelle
   au moins l'une parmi l'électrode positive et l'électrode négative est l'électrode pour une batterie rechargeable non aqueuse selon la revendication 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012026583 A
- GB 1190849 A
- US 4043955 A1
- JP H8250123 A
- JP 5861698 B
- WO 2012115096 A1
- JP 2012204303 A